# FASCICULE DE BREVET EUROPEEN

(11) **EP 3 482 577 B1**
(45) Date de publication et mention de la délivrance du brevet: **26.07.2023**
(21) Numéro de dépôt: 17735213.5
(22) Date de dépôt: 15.06.2017
(51) Int. Cl.: H04W 8/26, H04W 76/11

(54) **ÉTABLISSEMENT D'UNE COMMUNICATION PAR ALLOCATION À UN TERMINAL APPELANT D'UN IDENTIFIANT D'APPEL INTERMÉDIAIRE DÉDIÉ À LA COMMUNICATION**
EINRICHTUNG EINER KOMMUNIKATION DURCH ZUWEISUNG EINES ZWISCHENANRUFIDENTIFIKATORS FÜR DIE KOMMUNIKATION ZU EINEM ANRUFENDEN ENDGERÄT
ESTABLISHMENT OF A COMMUNICATION BY ALLOCATING TO A CALLER TERMINAL AN INTERMEDIATE CALL IDENTIFIER DEDICATED TO THE COMMUNICATION

(30) Priorité: 07.07.2016 FR 1656547
(43) Date de publication de la demande: 15.05.2019
(73) Titulaire: Orange, 92130 Issy-les-Moulineaux (FR)
(72) Inventeur: CASEAU, François, 75015 Paris (FR)
(86) Numéro de dépôt international: PCT/FR2017/051550
(87) Numéro de publication internationale: WO 2018/007705

(56) Documents cités:
- WO-A1-2016/203159
- FR-A1- 2 821 222
- KR-B1- 100 408 183
- US-A- 5 818 836
- US-A1- 2007 130 465
- US-A1- 2010 124 218

## Description

### Domaine de l'invention

La présente invention concerne l'établissement d'une communication depuis un premier dispositif de communication à destination d'un deuxième dispositif de communication, les premier et deuxième dispositifs de communication ayant chacun un identifiant d'appel principal. Elle concerne plus particulièrement les services de communication garantissant l'anonymat d'un utilisateur appelant.

### Arrière-plan de l'invention

Les services de communication garantissant l'anonymat d'un utilisateur appelant proposent actuellement d'allouer un identifiant d'appel secondaire au terminal de l'utilisateur appelant disposant déjà d'un identifiant d'appel principal. Par exemple, dans le cas où l'utilisateur appelant dispose d'un terminal ce communication mobile, l'identifiant d'appel principal est un identifiant MSISDN (en anglais « Mobile Station International Subscriber Directory Number ») correspondant de manière unique à la carte SIM (en anglais « Subscriber Identity Module ») qui est fournie par l'opérateur du réseau mobile auprès duquel s'est inscrit l'utilisateur. En règle générale, cet identifiant est le numéro de téléphone du terminal mobile dans ledit réseau mobile. De tes services de garantie de l'anonymat sont par exemple proposés lorsque l'abonné appelant souhaite passer une annonce sur un site Internet dédié à cet effet, tel que par exemple un site de petites annonces, un site de rencontres, un réseau social de type personnel ou professionnel, etc....Il est alors proposé à l'utilisateur de bénéficier d'un identifiant d'appel secondaire qui permet à ce dernier d'utiliser cet identifiant d'appel secondaire pour contacter par téléphone toute personne ayant laissé ses coordonnées sur le site Internet dédié, sans avoir à dévoiler à cette personne son identifiant d'appel principal. L'utilisateur appelant est également joignable sur cet identifiant d'appel secondaire.

Un tel service de garantie d'anonymat fonctionne de la façon suivante. L'utilisateur qui souhaite en bénéficier s'inscrit préalablement à la plateforme gérant ce service en fournissant ses coordonnées personnelles, et en particulier son identifiant d'appel principal. Un identifiant d'appel secondaire lui est alors alloué puis est enregistré dans la plateforme en correspondance avec son identifiant principal. L'utilisateur télécharge l'application dédiée à ce service sur son téléphone. Lorsque l'utilisateur souhaite joindre un usager d'un site Internet tel que mentionné plus haut et dont la plateforme de gestion communique avec la plateforme du service de garantie d'anonymat, il envoie à cette dernière, via l'application, un message contenant son identifiant d'appel principal et l'identifiant d'appel principal de l'usager qu'il souhaite appeler. A partir de l'identifiant principal du terminal appelant, la plateforme de service récupère l'identifiant d'appel secondaire du terminal appelant et envoie en retour au terminal appelant un message contenant un identifiant d'appel dédié à la communication à établir, lequel est par exemple un numéro de téléphone spécifique préalablement enregistré dans la plateforme du service de garantie d'anonymat. La réception de ce message par le terminal appelant déclenche alors un appel vocal à destination de l'identifiant d'appel dédié. Cet appel est intercepté par un routeur du réseau de communication qui a une connaissance préalable de l'identifiant d'appel dédié. A cet effet, le routeur récupère auprès de la plateforme du service de garantie d'anonymat l'identifiant secondaire du terminal appelant, puis émet un appel depuis cet identifiant secondaire vers l'identifiant d'appel principal du terminal de l'usager appelé. Enfin, le routeur établit la communication entre le terminal appelant et le terminal appelé.

Bien que le service décrit ci-dessus soit bien adapté pour garantir efficacement l'anonymat de l'utilisateur qui y a souscrit et assurer la continuité de l'appel, il peut s'avérer très coûteux pour l'appelant lorsque par exemple, l'identifiant d'appel dédié à la communication à établir se trouve dans une zone tarifaire différente de celle dans laquelle est situé l'identifiant principal du terminal appelé. Ainsi, par exemple, si l'identifiant principal du terminal appelé est associé à un réseau de communication de type fixe et que l'identifiant d'appel dédié à la communication à établir est associé par la plateforme de service à un réseau de communication de type mobile, l'appel passé depuis cet identifiant vers l'identifiant d'appel principal du terminal appelé s'avère au final très coûteux pour l'utilisateur du terminal appelant. Un tel déséquilibre de charges est donc préjudiciable à l'utilisation de ce type de service de communication garantissant l'anonymat de l'utilisateur appelant.

En outre, un tel service de garantie d'anonymat est limité à un unique contexte d'usage conditionné par la souscription de l'utilisateur à des sites Internet ciblés.

### Objet et résumé de l'invention

Un des buts de l'invention est de remédier à des inconvénients de l'état de la technique précité. L'invention est définie par les revendications indépendantes 1,5-7 et 9-12.

A cet effet, un objet de la présente invention concerne un procédé d'établissement d'une communication comme décrit par la revendication 1 de la présente demande.

Compte tenu du fait que, selon une première alternative de l'invention, l'identifiant d'appel dédié à la communication à établir est déterminé en fonction de l'identifiant d'appel principal du deuxième dispositif de communication, il est ainsi assuré que la zone tarifaire dans laquelle est situé l'identifiant d'appel dédié à la communication à établir est la même que celle dans laquelle est situé l'identifiant d'appel principal du deuxième dispositif de communication, c'est-à-dire le dispositif de communication destinataire de l'appel. Par conséquent, cette première alternative de l'invention permet avantageusement de garantir l'anonymat de l'utilisateur appelant tout en assurant l'équilibre de terminaison d'appel et en évitant de perturber la chaîne des coûts d'appel pour l'utilisateur appelant.

Par ailleurs, compte tenu du fait que, selon une deuxième alternative de l'invention, l'identifiant d'appel dédié à la communication à établir est déterminé en fonction d'un service de communication associé à la communication à établir, l'établissement de la communication sous couvert d'anonymat peut être élargi à d'autres contextes de communication que celui d'un appel vers un usager d'un site Internet. Un tel service de communication est par exemple un service de communication aux entreprises, dans lequel un salarié souhaite établir une communication de type professionnelle à partir de son dispositif de communication personnel.

Lorsqu'il n'est pas possible de trouver une association entre un identifiant d'appel prédéterminé et l'identifiant principal du deuxième dispositif de communication, un message est avantageusement envoyé au premier dispositif de communication pour lui notifier l'absence d'association. La réception de ce message déclenche alors un appel depuis le premier dispositif de communication à destination de l'identifiant d'appel principal du deuxième dispositif de communication. Pour cet appel, c'est l'identifiant d'appel principal du premier dispositif de communication qui est utilisé.

Une telle disposition permet ainsi de ne pas entraîner de rupture de communication, même quand une association n'est pas trouvée entre un identifiant d'appel prédéterminé et l'identifiant principal du deuxième dispositif de communication.

Un tel procédé d'établissement de communication est adapté à des communications aussi bien vocales que textuelles. Ce procédé est par ailleurs particulièrement bien adapté pour des communications vocales où l'utilisateur, à l'origine de la communication, doit être mis en relation directe et en temps réel avec l'appelé.

Selon un mode de réalisation particulier, une association entre l'identifiant d'appel principal du deuxième dispositif de communication et un identifiant d'appel prédéterminé qui est fonction de l'identifiant d'appel principal du deuxième dispositif de communication met en oeuvre ce qui suit :
- identification du type de réseau auquel le deuxième dispositif de communication est connecté,
- sélection d'un identifiant d'appel prédéterminé conforme au type de réseau identifié, en tant qu'identifiant d'appel dédié à la communication à établir.

Une telle disposition permet d'affecter, de manière simple, à la même zone tarifaire d'appels, l'identifiant d'appel dédié à la communication à établir et l'identifiant d'appel principal du deuxième dispositif de communication.

Selon un autre mode de réalisation, une association entre l'identifiant d'appel principal du deuxième dispositif de communication et un identifiant d'appel prédéterminé qui est fonction d'un service de communication associé à la communication à établir met en oeuvre une sélection d'un identifiant d'appel prédéterminé correspondant à un identifiant d'appel gratuit, en tant qu'identifiant d'appel dédié à la communication à établir.

Une telle disposition permet à l'utilisateur appelant de passer des appels gratuits depuis le premier dispositif de communication, à condition qu'il ait été inscrit à un service de communication associé à la communication à établir, un tel service de communication ayant été enregistré au préalable dans le dispositif de gestion de communication. Une telle disposition est particulièrement adaptée à un service de communication aux entreprises, dans lequel le salarié est susceptible de passer des appels professionnels en mobilité, depuis son téléphone personnel.

Les différents modes ou caractéristiques de réalisation précités peuvent être ajoutés indépendamment ou en combinaison les uns avec les autres au procédé d'établissement de communication défini ci-dessus.

L'invention concerne également un dispositif de communication selon la revendication 6.

L'invention concerne également un dispositif de gestion de communication selon la revendication 7.

L'invention concerne encore un programme d'ordinateur pour mettre en oeuvre des instructions de code de programme pour l'exécution des étapes du procédé d'établissement d'une communication selon l'invention, lorsqu'un tel programme est exécuté sur un dispositif de gestion de communication.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé d'établissement de communication selon l'invention, tel que décrit ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, une clé USB ou encore un moyen d'enregistrement magnétique, par exemple un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'établissement de communication précité.

### Brève description des dessins

D'autres caractéristiques et avantages apparaîtront à la lecture d'un mode de réalisation préféré décrit en référence aux figures dans lesquelles:
- la figure 1 est une vue schématique et générale d'un système d'établissement d'une communication selon l'invention,
- la figure 2 présente la structure simplifiée d'un mode de réalisation d'un dispositif de gestion de communication appartenant au système de la figure 1,
- la figure 3 présente la structure simplifiée d'un mode de réalisation d'un dispositif de communication initiateur d'une communication dans le système de la figure 1,
- la figure 4 représente les principales étapes d'un procédé d'établissement d'une communication dans le système de la figure 1,
- les figures 5A à 5B représentent des détails de mise en oeuvre du procédé illustré sur la figure 4.

### Description détaillée d'un mode de réalisation

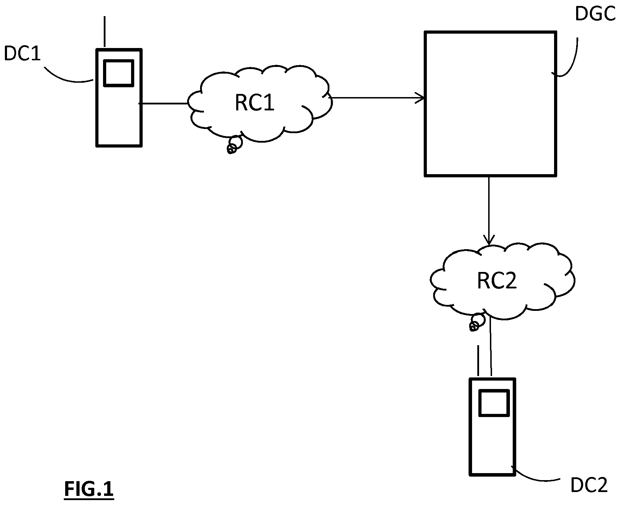

La figure 1 montre schématiquement le système dans lequel est mis en oeuvre le procédé d'établissement d'une communication selon un mode de réalisation préféré. Dans un souci de clarté de la figure 1, certains éléments bien connus de ce système ne sont pas représentés. De tels éléments sont par exemple des serveurs, des noeuds, des stations de base, des passerelles ou encore d'autres entités du réseau de télécommunications utilisé dans ce système.

Le système comprend un premier dispositif de communication DC1 apte à établir une communication à destination d'un deuxième dispositif de communication DC2.

Dans l'exemple représenté, le dispositif de communication DC1 est un téléphone mobile comprenant une carte SIM dotée d'un identifiant d'abonné unique appelé IMSI (abréviation anglaise de « International Mobile Subscriber Identity »). De façon connue en soi, cet identifiant est utilisé pour identifier le dispositif de communication DC1 dans son réseau de communication de rattachement RC1, c'est-à-dire le réseau auprès duquel l'utilisateur UT1 du dispositif de communication DC1 s'est abonné. Dans l'exemple représenté, le réseau RC1 est de type mobile tel qu'un réseau GSM (abréviation anglaise de « Global System for Mobile communications ») ou UMTS (abréviation anglaise de « Universal Mobile Télécommunications System »). L'identifiant IMSI est associé à un identifiant d'appel principal MSISDN, noté IAP1, qui est le numéro de téléphone permettant de joindre le dispositif de communication DC1.

Cet exemple n'est bien sûr pas limitatif. Ainsi, selon un autre exemple, le dispositif de communication DC1 est par exemple un téléphone fixe rattaché à un autocommutateur téléphonique privé PABX (de l'anglais « Private Automatic Branch eXchange »).

En fonction du type du réseau de communication RC1, l'identifiant d'appel principal IAP1 du dispositif de communication DC1 pourrait être différent d'un numéro de téléphone. Par exemple, il pourrait consister en des métadonnées associées à l'utilisateur UT1 du dispositif de communication DC1, tel qu'en particulier une image ou des informations sur l'utilisateur, telles que son nom et son adresse.

Le deuxième dispositif de communication DC2 est apte à recevoir la communication initiée par le dispositif de communication DC1. De la même façon que le dispositif de communication DC1, le dispositif de communication DC2 est également doté d'un identifiant d'appel principal IAP2. Dans l'exemple représenté, le dispositif de communication DC2 est un téléphone mobile rattaché à un réseau de communication RC2 de type mobile. Toutefois, le dispositif de communication DC2 peut être également un téléphone fixe rattaché à un réseau de télécommunications commuté ou bien encore un serveur de communication, tel que par exemple un serveur de réception d'appels d'urgence.

Selon un autre exemple non représenté, les réseaux de communication RC1 et RC2 peuvent former un réseau de communication unique d'un même opérateur de télécommunications.

En outre, dans la présente description, on entend par « communication » un appel vocal classique ou n'importe quelle autre session de communication de type données et/ou audio et/ou vidéo initiée par le dispositif de communication DC1 à destination du dispositif de communication DC2.

Le système représenté sur la figure 1 comprend en outre un dispositif de gestion de communication DGC. Un tel dispositif est une plateforme installée dans le réseau qui est destinée à :
- traiter toute communication initiée par le dispositif de communication DC1 à partir de son identifiant d'appel principal IAP1,
- et inversement traiter toute communication initiée par le dispositif de communication DC2 à partir de son identifiant d'appel principal IAP2, à destination de l'identifiant principal IAP1 du dispositif de communication DC1.

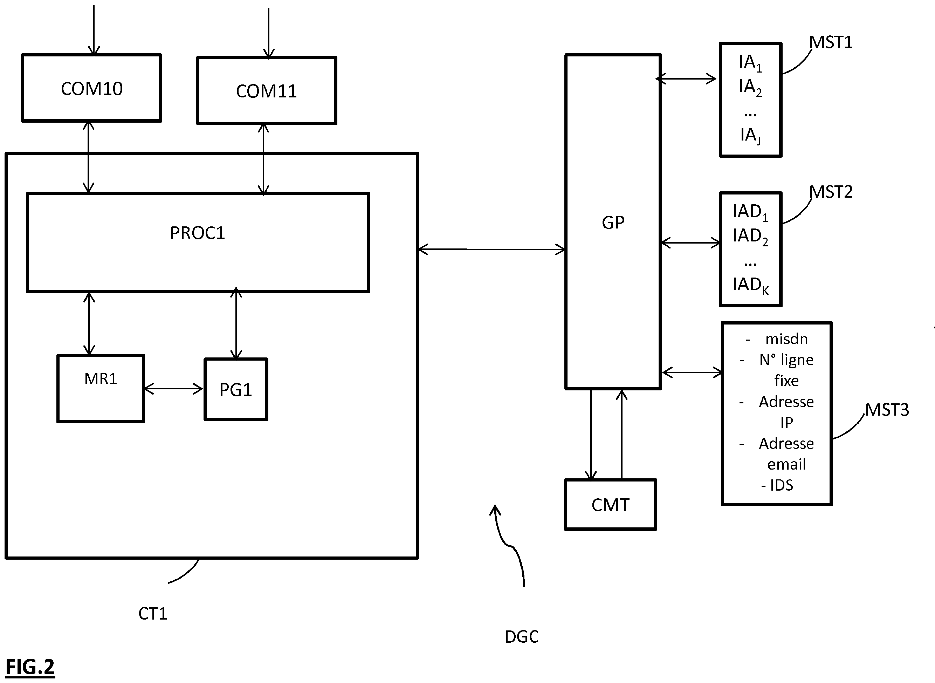

En relation avec la figure 2, on considère maintenant la structure simplifiée de la plateforme de gestion de communication DGC selon un exemple de réalisation de l'invention. Une telle plateforme est adaptée pour mettre en oeuvre le procédé d'établissement d'une communication selon l'invention qui va être décrit ci-dessous.

Par exemple, la plateforme DGC de gestion de communication comprend des ressources physiques et/ou logicielles, en particulier un circuit de traitement CT1 pour mettre en oeuvre le procédé d'établissement de communication selon l'invention, le circuit de traitement CT1 contenant un processeur PROC1 piloté par un programme d'ordinateur PG1.

A l'initialisation, les instructions de code du programme d'ordinateur PG1 sont par exemple chargées dans une mémoire RAM, notée MR1, avant d'être exécutées par le circuit de traitement CT1.

La plateforme DGC de gestion de communication comprend principalement :
- une interface de communication COM10 qui est adaptée pour échanger des messages avec le dispositif de communication DC1 de la figure 1, via le réseau RC1 ou bien un autre réseau non représenté sur la figure 1, lesdits messages étant conformes par exemple au protocole http (abréviation anglaise de « HyperText Transfer Protocol »),
- une interface de communication COM11 apte à communiquer avec les dispositifs de communication DC1 et DC2 et qui, selon le type de communication à établir, peut-être une interface de communication apte à émettre ou recevoir des appels vocaux ou bien une interface de communication apte à émettre ou recevoir des messages textuels de type SMS (de l'anglais « Short Message Service ») ou bien encore une interface de communication apte à émettre ou recevoir des messages multimédia de type MMS (de l'anglais « Multimedia Messaging Service »),
- un gestionnaire de profils GP apte à gérer le profil de l'utilisateur UT1 du dispositif de communication DC1,
- un premier module de stockage MST1, par exemple une base de données, relié au gestionnaire de profils GP et contenant une pluralité d'identifiants d'appel secondaires IA₁, IA₂,...,IAₘ,..., IA_{J} où J est un entier supérieur ou égal à 1 et 1≤m≤J,
- un deuxième module de stockage MST2, par exemple une base de données, relié au gestionnaire de profils GP et contenant une pluralité d'identifiants d'appel prédéterminés IAD₁, IAD₂,..., IADₙ,..., IAD_{K}, où K est un entier supérieur ou égal à 1 et 1≤n≤K,
- un troisième module de stockage MST3, par exemple une base de données, relié au gestionnaire de profils GP et contenant des informations d'identification associées au dispositif de communication DC1, ces informations ayant été, lors d'un échange préalable établi entre l'utilisateur UT1 du dispositif de communication DC1 et la plateforme DGC, communiquées à cette dernière, puis enregistrées dans le troisième module de stockage MST3 en association avec un des identifiants d'appel secondaires stockés dans le premier module de stockage MST1, par exemple l'identifiant d'appel secondaire IAₘ.

De telles informations d'identification sont par exemple l'identifiant msisdn du dispositif de communication DC1, le numéro de ligne fixe de l'utilisateur UT1 du dispositif de communication DC1, l'adresse IP ou bien l'adresse email permanente de l'utilisateur UT1.

Les interfaces de communication COM10, COM11, ainsi que le gestionnaire de profils GP, sont pilotés par le processeur PROC1 du circuit de traitement CT1.

Selon un mode de réalisation, les identifiants d'appel secondaires IA₁, IA₂,..., IAₘ,..., IA_{J} précités font partie d'un pool attribué par l'administrateur de la plateforme DGC à un fournisseur de service partenaire auprès duquel s'est préalablement inscrit l'utilisateur UT1 du dispositif de communication DC1. Autrement dit, ce pool d'identifiants d'appels secondaires est réservé au service auquel a souscrit l'utilisateur UT1. Si l'utilisateur UT1 souscrit à un autre service partenaire de la plateforme de gestion de communication DGC, un pool différent d'identifiants d'appels secondaires sera réservé pour cet autre service.

Un identifiant d'appel secondaire sélectionné dans le pool d'identifiants d'appel secondaires IA₁, IA₂,..., IAₘ,..., IA_{J}, par exemple l'identifiant IAₘ, est associé aux informations d'identification relatives au dispositif de communication DC1, qui sont stockées dans le module de stockage MST3. Dans l'exemple représenté, l'identifiant d'appel secondaire sélectionné IAₘ est un numéro de téléphone. Toutefois, en variante et selon le contexte de la communication à établir, l'identifiant d'appel secondaire peut être un alias, un pseudo ou une identité réseau de type msisdn, adresse IP, adresse email, adresse E.164, adresse SIP. En outre, cet identifiant d'appel secondaire peut être enregistré en association avec un identifiant IDS du service auprès duquel l'utilisateur UT1 du premier dispositif de communication DC1 a souscrit. A cet effet, cet identifiant secondaire a une durée de validité qui correspond par exemple à la durée de souscription à ce service ou bien à une durée prédéterminée, fixée au préalable par l'administrateur de la plateforme de gestion de communication DGC.

Selon un mode de réalisation, comme cela sera décrit plus en détail dans la suite de la description, les identifiants d'appel IAD₁, IAD₂,..., IADₙ,..., IAD_{K} prédéterminés sont de différents types. Un ou plusieurs de ces identifiants peut être un numéro de téléphone associé à un réseau de communication de type fixe et comprenant à cet effet un préfixe particulier PF1. Un autre ou plusieurs autres de ces identifiants peut être un numéro de téléphone associé à un réseau de communication de type mobile et comprenant à cet effet un préfixe particulier PF2. Encore un autre ou plusieurs autres de ces identifiants peut être un numéro de téléphone à tarif spécial et comprenant à cet effet un préfixe particulier PF3.

Le gestionnaire de profil GP est connecté à un centre de commutation CMT qui est apte à traiter le trajet de la communication établie depuis le dispositif de communication DC1 jusqu'au dispositif de communication DC2, tels que représentés sur la figure 1.

Le centre de commutation CMT est bien connu en soi. Dans l'exemple représenté, il correspond par exemple à un centre de commutation mobile "MSC" (Mobile Switching Centre) d'un réseau de télécommunications mobile. Selon un autre mode de réalisation dans lequel le dispositif de communication DC1 serait de type fixe, le centre de commutation CMT pourrait être un commutateur local d'un réseau de télécommunications fixe. On notera que dans le réseau de télécommunications fixe, le commutateur local traite les appels locaux entre des abonnés d'un même commutateur ainsi que le départ et l'arrivée du trafic avec les autres commutateurs.

Le centre de commutation CMT est caractérisé par deux fonctions principales.

La première fonction principale est une fonction de contrôle d'appel qui correspond à la fonction centrale d'un commutateur téléphonique. Une telle fonction met en oeuvre différentes opérations telles que le décodage d'informations d'adresse et le routage d'appels téléphoniques depuis un premier dispositif de communication appelant vers un deuxième dispositif de communication appelé. Une telle fonction est associée à certaines fonctionnalités d'appel telles que:
- une mise en attente de l'appel,
- un transfert d'appel sur une messagerie vocale lorsque le dispositif de communication appelé n'est pas décroché,
- une sonnerie particulière indiquant à l'appelant que son correspondant est déjà en ligne ou non joignable.

Cette première fonction traite par ailleurs le niveau de signalisation établi au cours de la communication entre les deux dispositifs de communication, c'est-à-dire le niveau correspondant à la signalisation des messages échangés via les différentes entités du réseau de communication.

La deuxième fonction principale est une fonction « Média » pour traiter toute la partie Média de la communication entre les deux dispositifs de communication. Une telle fonction correspond au niveau « Média » de traitement des données textuelles et/ou audio et/ou des images/vidéos échangées entre les deux dispositifs de communication lors de la communication.

Il convient de noter que même si dans le mode de réalisation représenté sur la figure 2, le gestionnaire de profils GP et le centre de commutation CMT sont hébergés ensemble sur la plateforme de gestion de communication DGC, cet exemple n'est en rien limitatif.

En effet, dans une variante de réalisation, la plateforme de gestion de communication DGC pourrait contenir uniquement le gestionnaire de profils GP, le centre de commutation CMT étant hébergé à un autre endroit dans le réseau mais toujours connecté fonctionnellement au gestionnaire de profils GP.

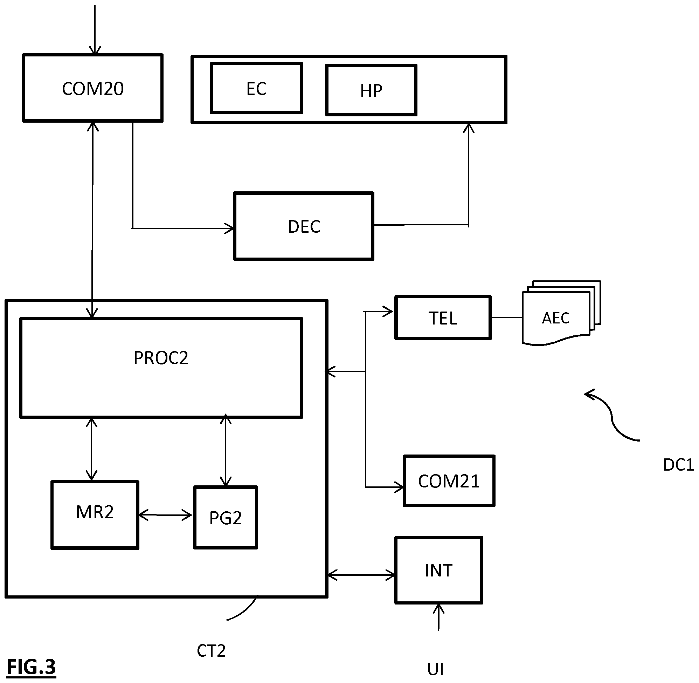

En relation avec la figure 3, on considère maintenant la structure simplifiée du dispositif de communication DC1 selon un exemple de réalisation de l'invention.

Par exemple, le dispositif de communication DC1, ici un téléphone mobile, comprend des ressources physiques et/ou logicielles, en particulier un circuit de traitement CT2 pour mettre en oeuvre les échanges avec la plateforme de gestion de communication DGC des figures 1 et 2 préalablement à la communication à établir, puis une fois ladite communication établie.

Le circuit de traitement CT2 contient un processeur PROC2 piloté par un programme d'ordinateur PG2.

A l'initialisation, les instructions de code du programme d'ordinateur PG2 sont par exemple chargées dans une mémoire RAM, notée MR2, avant d'être exécutées par le circuit de traitement CT2.

Le dispositif de communication DC1 comprend principalement :
- une interface de communication COM20 qui est adaptée pour échanger des messages avec le gestionnaire de profils GP de la plateforme de gestion de communication DGC des figures 1 et 2, via le réseau de communication RC1 ou un autre réseau de communication de données non représenté, lesdits messages étant conformes par exemple au protocole http (abréviation anglaise de « HyperText Transfer Protocol »),
- une interface de communication COM21 apte à établir/recevoir un appel via le réseau de communication et qui, selon le type de communication à établir, peut-être une interface de communication apte à émettre ou recevoir des appels vocaux ou bien une interface de communication apte à émettre ou recevoir des messages textuels de type SMS ou bien encore une interface de communication apte à émettre ou recevoir des messages multimédia de type MMS.

Le dispositif de communication DC1 comprend également :
- un module INT de traitement des interactions utilisateurs UI,
- un écran de visualisation EC,
- un haut-parleur HP,
- une interface DEC de décodage audio/vidéo des contenus de type texte, audio, vidéo ou audiovisuel, ladite interface étant adaptée pour transmettre les signaux décodés à l'écran EC ou dans le haut-parleur HP,
- un module TEL de téléchargement de contenus de type texte et/ou audio et/ou audiovisuel ou encore d'applications.

Plus particulièrement, l'interface de communication COM20 est apte, préalablement à l'établissement de la communication avec le deuxième dispositif de communication DC2, à envoyer, à destination de la plateforme de gestion de communication DGC, un message qui comprend :
- les informations d'identification associées au dispositif de communication DC1 et qui ont été préalablement enregistrées, comme expliqué plus haut, dans le module de stockage MST3 de la plateforme de gestion de communication DGC,
- l'identifiant d'appel principal IAP2 du dispositif de communication DC2 à appeler.

En outre, l'interface de communication COM20 est apte à recevoir, en provenance de la plateforme DGC de gestion de communication, via l'interface de communication COM10 de cette dernière :
- ou bien un des identifiants d'appel prédéterminés IAD₁, IAD₂,..., IADₙ,..., IAD_{K} qui ont été stockés préalablement dans le module de stockage MST2. La sélection de tel ou tel identifiant d'appel prédéterminé en tant qu'identifiant d'appel dédié à la communication à établir sera décrit de façon plus détaillée dans la suite de la description,
- ou bien un message indiquant l'absence d'identifiant d'appel dédié.

Le module TEL de téléchargement du dispositif de communication DC1 est en outre apte à télécharger, depuis la plateforme DGC de gestion de communication, une application AEC dédiée à l'établissement d'une communication conformément à la présente invention. Ladite application a notamment pour fonction, en réponse à la réception d'un message indiquant un identifiant d'appel dédié à la communication à établir, tel que sélectionné par la plateforme DGC de gestion de communication, de déclencher un appel, via le réseau de communication RC1, vers cet identifiant d'appel dédié. Ladite application a également pour fonction, en réponse à la réception d'un message indiquant l'absence d'identifiant d'appel dédié, de déclencher un appel depuis le dispositif de communication DC1 directement à destination de l'identifiant d'appel principal IAP2 du dispositif de communication DC2, en utilisant l'identifiant d'appel principal IAP1 du dispositif de communication DC1.

Les interfaces de communication COM20, COM21, le module de téléchargement TEL, ainsi que le module INT de traitement des interactions utilisateurs, sont pilotés par le processeur PROC2 du circuit de traitement CT2.

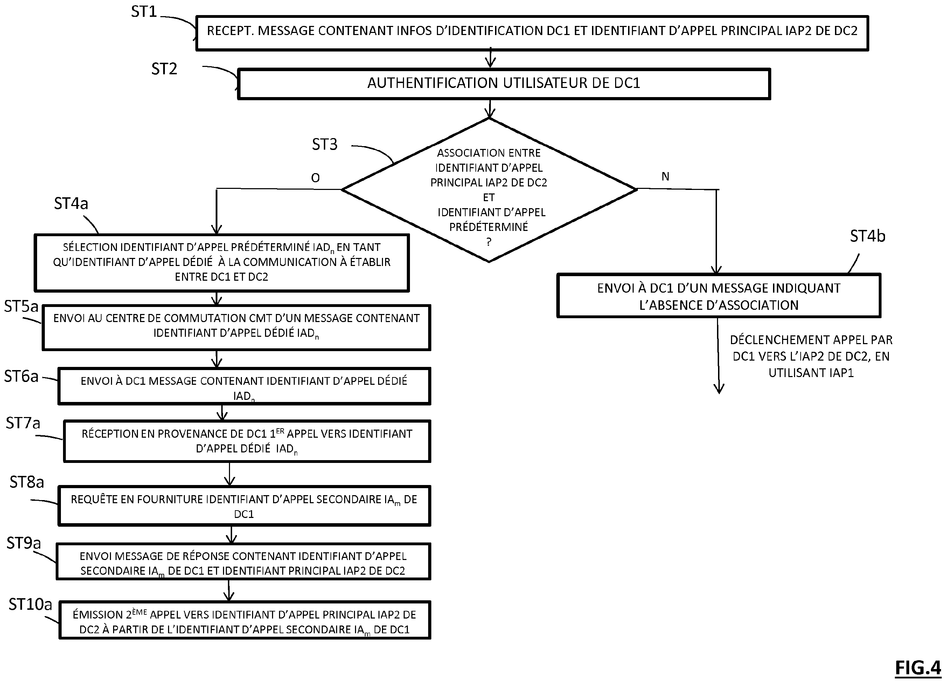

En référence à la figure 4, on décrit maintenant le déroulement d'un procédé d'établissement d'une communication selon l'invention, tel que mis en oeuvre dans la plateforme de gestion de communication DGC.

Préalablement au déroulement de ce procédé, il est considéré que :
- l'application AEC d'établissement d'une communication vers un identifiant d'appel dédié a été préalablement téléchargée par le module de téléchargement TEL du dispositif de communication DC1,
- l'utilisateur UT1 du dispositif de communication DC1 a communiqué à la plateforme DGC de gestion de communication les informations d'identification associées à son dispositif de communication DC1,
- la plateforme DGC a communiqué en retour au dispositif de communication DC1 un identifiant d'appel secondaire choisi dans le pool d'identifiants d'appels secondaires IA₁, IA₂,...,IAₘ,..., IA_{J} disponibles au moment de la requête de l'utilisateur UT1. L'identifiant d'appel secondaire sélectionné est par exemple l'identifiant IAₘ.

De façon générale, le procédé d'établissement d'une communication selon l'invention est mis en oeuvre dans le cas où l'utilisateur UT1 du dispositif de communication DC1 souhaite initier une communication à partir de ce dernier à destination du dispositif de communication DC2 de la figure 1.

A cet effet, au cours d'une étape ST1 représentée sur la figure 4, le gestionnaire de profils GP de la plateforme de gestion de communication DGC reçoit en provenance du dispositif de communication DC1, via l'interface de communication COM10 de cette dernière, un message, par exemple selon le protocole http, qui contient :
- les informations d'identification relatives au dispositif de communication DC1,
- l'identifiant d'appel principal IAP2 du dispositif de communication DC2.

Au cours d'une étape ST2, la plateforme DGC vérifie que l'utilisateur UT1 est authentifié en comparant les informations d'identification contenues dans le message reçu avec celles enregistrées dans le module de stockage MST3 de la figure 2.

A titre de variante, une telle étape ST2 peut avoir lieu préalablement à l'étape ST1, le message envoyé par le dispositif de communication DC1 à la plateforme DGC ne contenant par exemple que les informations d'identification associées au dispositif de communication DC1.

Au cours d'une étape ST3, la plateforme DGC recherche une association entre l'identifiant d'appel principal IAP2 du dispositif de communication DC2, tel que reçu à l'étape ST1, et un identifiant d'appel prédéterminé, parmi les identifiants d'appel prédéterminés IAD₁, IAD₂,..., IADₙ,..., IAD_{K} stockés dans le module de stockage MST2.

En fonction du contexte de la communication à établir, une telle association prend avantageusement en compte :
- soit l'identifiant d'appel principal IAP2 du dispositif de communication DC2, tel que contenu dans le message reçu à l'étape ST1,
- soit un service de communication associé à la communication à établir, auquel a préalablement souscrit l'utilisateur UT1 du dispositif de communication DC1.

Un tel identifiant d'appel prédéterminé est destiné à être utilisé comme identifiant d'appel intermédiaire vers lequel est acheminée la communication initiée par le premier dispositif de communication DC1, avant d'être routée vers l'identifiant principal IAP2 du deuxième dispositif de communication DC2. Un tel identifiant d'appel prédéterminé est connu à la fois de la plateforme DGC et du centre de commutation CMT représenté à la figure 2. Bien que sur la figure 2, le module de stockage MST2 contenant ces identifiants d'appel prédéterminés soit relié au gestionnaire de profils, les identifiants d'appel prédéterminés pourraient tout aussi bien être délivrés par le centre de commutation CMT sur requête du gestionnaire de profils GP, à chaque fois que le premier dispositif de communication DC1 souhaite initier une communication.

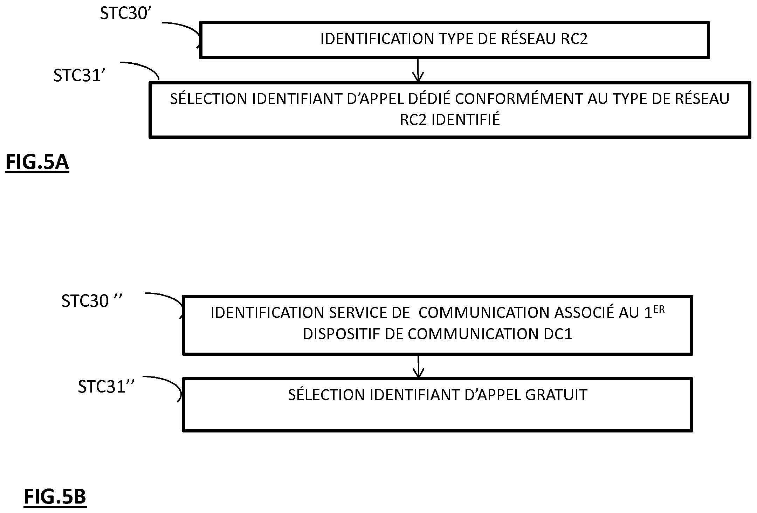

Dans le cas où lors de la recherche d'association, c'est l'identifiant d'appel principal IAP2 du dispositif de communication DC2 qui est pris en compte, selon un exemple représenté sur la figure 5A, il est procédé, au cours d'une étape STC30', à une identification du type du réseau RC2 (figure 1) auquel le deuxième dispositif de communication DC2 est connecté. Au cours d'une étape STC31', un identifiant d'appel prédéterminé est alors sélectionné dans le module de stockage MST2 conformément au type de réseau identifié. Par exemple, dans le cas où un tel réseau est de type mobile, un identifiant d'appel dédié IADₙ correspondant à un numéro de téléphone mobile est sélectionné dans le module de stockage MST2. Dans le cas où un tel réseau est de type fixe, un identifiant d'appel dédié IADₙ correspondant à un numéro de téléphone fixe est sélectionné dans le module de stockage MST2. Selon une variante de l'étape STC31', l'identifiant d'appel prédéterminé est sélectionné dans le module de stockage MST2 comme ayant le même préfixe que celui de l'identifiant d'appel principal IAP2 du deuxième dispositif de communication DC2.

Dans le cas où lors de la recherche d'association, c'est un service de communication associé à la communication à établir qui est pris en compte, selon un exemple représenté sur la figure 5B, il est procédé, au cours d'une étape STC30", à une vérification, dans la mémoire de stockage MST3 de la plateforme DGC, qu'un identifiant IDS d'un tel service de communication a bien été enregistré en association avec les informations d'identification associées au premier dispositif de communication DC1. Par exemple, la présence ou l'absence de l'identifiant de service IDS dans le module de stockage MST3 est indiquée par un drapeau mis respectivement à 1 ou 0. Dans le cas de la présence de l'identifiant de service IDS, au cours d'une étape STC31", un identifiant d'appel prédéterminé est alors sélectionné dans le module de stockage MST2 en tant que numéro d'appel gratuit dédié à la communication à établir entre les dispositifs de communication DC1 et DC2. Selon un exemple de réalisation, un tel service de communication est par exemple un service de communication aux entreprises, dans lequel un salarié souhaite établir une communication de type professionnelle à partir du premier dispositif de communication DC1 qui est ici le téléphone personnel du salarié.

En référence à nouveau à la figure 4, dans le cas où, à l'issue de l'étape ST3, un identifiant d'appel prédéterminé, par exemple IADₙ, est trouvé, il est procédé, au cours d'une étape ST4a, à la sélection de cet identifiant en tant qu'identifiant d'appel dédié à la communication à établir entre les dispositifs de communication DC1 et DC2.

Au cours d'une étape ST5a, le gestionnaire de profils GP de la figure 2 envoie un message au centre de commutation CMT pour l'informer qu'un identifiant d'appel dédié IADₙ a été sélectionné pour la communication à établir depuis le premier dispositif de communication DC1 vers le second dispositif de communication DC2.

Un tel message comprend l'identifiant d'appel IADₙ dédié à la communication à établir. Ce message pourrait en outre contenir l'identifiant d'appel principal du premier dispositif de communication DC1, dans le cas où plusieurs dispositifs de communication établissent une communication à destination de l'identifiant IADₙ.

Au cours d'une étape ST6a, qui peut être mise en oeuvre soit avant ou après l'étape ST5a, soit simultanément à l'étape ST5a, le gestionnaire de profils GP envoie un message au premier dispositif de communication DC1, via l'interface de communication COM10 de la plateforme DGC, par exemple selon le protocole http, ledit message contenant l'identifiant d'appel dédié IADₙ. Dans l'exemple représenté, cet identifiant d'appel dédié est un numéro de téléphone.

Suite à la réception d'un tel message par le premier dispositif de communication DC1, l'application AEC dédiée à l'établissement de la communication, telle qu'installée dans le module de téléchargement TEL du premier dispositif de communication DC1, déclenche l'envoi d'un appel depuis l'interface de communication COM21 de ce dernier, via le réseau de communication RC1, vers l'identifiant d'appel dédié IADₙ, en utilisant son identifiant d'appel principal IAP1.

Au cours d'une étape ST7a, cet appel est reçu par le centre de commutation CMT, via l'interface de communication COM11 de la figure 2. Le centre de commutation CMT ayant la connaissance de l'identifiant d'appel dédié IADₙ identifie alors cet appel comme une première branche de la communication à établir entre le premier dispositif de communication DC1 et le deuxième dispositif de communication DC2.

Au cours d'une étape ST8a, le centre de commutation CMT envoie au gestionnaire de profils GP de la figure 2 une requête en fourniture de l'identifiant d'appel secondaire IAₘ, préalablement alloué au premier dispositif de communication DC1 par le gestionnaire de profils GP.

Au cours d'une étape ST9a, en réponse à la requête, le gestionnaire de profils GP envoie au centre de commutation CMT un message contenant l'identifiant d'appel secondaire IAₘ ainsi que l'identifiant d'appel principal IAP2 du deuxième dispositif de communication DC2.

Les échanges entre le centre de commutation CMT et le gestionnaire de profils GP sont par exemple conformes au protocole SIP (de l'anglais « Session Initiation Protocol »).

.A réception de ce message, au cours d'une étape ST10a, le centre de commutation CMT établit un appel à destination de l'identifiant d'appel principal IAP2 du deuxième dispositif de communication DC2 à partir de l'identifiant d'appel secondaire IAₘ du premier dispositif de communication DC1. Le centre de commutation CMT identifie alors cet appel comme une deuxième branche de la communication à établir entre le premier dispositif de communication DC1 et le deuxième dispositif de communication DC2.

Dans le cas où le deuxième dispositif de communication DC2 répond à l'appel, le centre de commutation CMT établit la communication entre le premier dispositif de communication DC1 et le deuxième dispositif de communication DC2. L'utilisateur UT1 du premier dispositif de communication DC1 est ainsi assuré que son identifiant d'appel principal IAP1 ne sera pas divulgué à l'utilisateur du deuxième dispositif de communication DC2. En outre, dans le cas particulier où l'utilisateur est salarié d'une entreprise et que le dispositif de communication DC1 est son téléphone personnel, l'utilisateur est assuré que sa communication à destination du dispositif de communication DC2 ne lui sera pas facturée.

Dans le cas où, à l'issue de l'étape ST3, aucune association n'est trouvée, au cours d'une étape ST4b, la plateforme de gestion de communication DGC envoie au dispositif de communication DC1, via l'interface de communication COM10 de cette dernière, un message, par exemple selon le protocole http, qui indique l'absence d'association. Selon un exemple de réalisation, un tel message peut contenir un code d'erreur particulier.

Une telle association n'est pas trouvée, dans le cas par exemple où l'identifiant d'appel principal IAP2 du dispositif de communication DC2 est un numéro d'urgence (pompiers, police, etc...), un numéro d'appel surtaxé ou encore tout identifiant d'appel dont le préfixe ne correspond à aucun des préfixes des identifiants d'appels prédéterminés IAD₁, IAD₂,..., IADₙ,..., IAD_{K} qui ont été stockés préalablement dans le module de stockage MST2.

A réception d'un tel message sur l'interface de communication COM20 du dispositif de communication DC1, l'application AEC de ce dernier reconnait le contenu de ce message et déclenche un appel depuis le dispositif de communication DC1 directement à destination de l'identifiant d'appel principal IAP2 du dispositif de communication DC2, en utilisant l'identifiant d'appel principal IAP1 du dispositif de communication DC1.

Un tel appel peut être déclenché directement par l'application AEC, conformément par exemple au protocole SIP. Alternativement, un tel appel peut être du type voix/SMS/MMS et être émis directement via l'interface de communication COM21 du dispositif de communication DC1.

Grâce à cette disposition, même dans le cas où une association ne peut pas être trouvée entre l'identifiant d'appel principal IAP2 du dispositif de communication DC2 et un identifiant d'appel prédéterminé, une communication de type classique peut malgré tout être établie entre les dispositifs de communication DC1 et DC2, en utilisant l'identifiant d'appel principal IAP1 du dispositif de communication DC1.

En outre, une telle disposition est adaptable aux appels émis vers des numéros d'urgence pour lesquels il est interdit de masquer l'identifiant d'appel principal du dispositif de communication appelant.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé d'établissement d'une communication, mis en oeuvre au niveau d'un dispositif de gestion de communication (DGC), comprenant:
- une réception (ST1) d'un premier message en provenance d'un premier dispositif de communication, ledit premier message étant un message pour initier une communication à destination d'un deuxième dispositif de communication (DC2), les premier et deuxième dispositifs de communication ayant chacun un identifiant d'appel principal, ledit premier message comprenant :
• des informations d'identification associées au premier dispositif de communication préalablement enregistrées dans le dispositif de gestion de communication,
• l'identifiant d'appel principal (IAP2) du deuxième dispositif de communication,
- une recherche (ST3) d'une association entre l'identifiant d'appel principal du deuxième dispositif de communication et un identifiant (IADₙ) d'appel intermédiaire fonction soit de l'identifiant d'appel principal du deuxième dispositif de communication contenu dans le message reçu, soit d'un service de communication associé à la communication à router,
- si une association est trouvée,
• sélection (ST4a) dudit identifiant d'appel intermédiaire en tant qu'identifiant d'appel dédié à la communication à router, via ledit identifiant d'appel intermédiaire, vers ledit deuxième dispositif de communication,
• envoi (ST6a) au premier dispositif de communication d'un message contenant ledit identifiant d'appel intermédiaire associé audit identifiant d'appel principal du deuxième dispositif de communication,
• interception (ST7a-ST9a) d'un appel du premier dispositif de communication vers l'identifiant d'appel intermédiaire, puis routage (ST10a) de l'appel vers l'identifiant d'appel principal du deuxième dispositif de communication, en utilisant un identifiant d'appel secondaire du premier dispositif de communication, l'identifiant secondaire ayant été préalablement associé en correspondance avec les informations d'identification associées au premier dispositif de communication,
- si aucune association n'est trouvée, envoi (ST4b) au premier dispositif de communication d'un message indiquant l'absence d'association, pour déclencher un appel du premier dispositif de communication vers l'identifiant d'appel principal du deuxième dispositif de communication, en utilisant l'identifiant d'appel principal du premier dispositif de communication.

2. Procédé selon la revendications 1, comprenant:
- un envoi dudit identifiant d'appel intermédiaire vers un centre de commutation en charge de router les communications destinées audit numéro d'appel intermédiaire vers ledit identifiant d'appel principal dudit deuxième dispositif ;
sur requête dudit centre de commutation, un envoi dudit identifiant d'appel secondaire associé audit numéro d'appel intermédiaire audit centre de commutation.

3. Procédé selon l'une des revendications 1 à 2, dans lequel ladite association entre l'identifiant d'appel principal du deuxième dispositif de communication et un identifiant (IADₙ) d'appel intermédiaire fonction de l'identifiant d'appel principal du deuxième dispositif de communication met en oeuvre :
- une identification (STC30') du type de réseau auquel le deuxième dispositif de communication est connecté,
- une sélection (STC31') d'un identifiant d'appel intermédiaire conforme au type de réseau identifié, en tant qu'identifiant d'appel dédié à la communication à router.

4. Procédé selon l'une des revendications 1 à 3, dans lequel ladite association entre l'identifiant d'appel principal du deuxième dispositif de communication et un identifiant (IADₙ) d'appel indéterminé fonction d'un service de communication associé à la communication à établir met en oeuvre une sélection (STC31') d'un identifiant d'appel intermédiaire correspondant à un identifiant d'appel gratuit, en tant qu'identifiant d'appel dédié à la communication à router.

5. Procédé mis en oeuvre dans un premier dispositif de communication, dit premier dispositif de communication appelant (DC1), disposant d'un identifiant d'appel principal (IAP1), le procédé étant adapté pour :
- envoyer, à destination d'un dispositif de gestion de communication (DGC), un premier message d'initiation d'une communication avec un second dispositif de communication à appeler disposant d'un identifiant d'appel principal, ledit premier message comprenant :
• des informations d'identification associées au premier dispositif de communication appelant préalablement enregistrées dans le dispositif de gestion de communication,
• l'identifiant d'appel principal (IAP2) du second dispositif de communication à appeler,
- recevoir, sur réponse audit premier message, en provenance du dispositif de gestion de communication, ou bien un identifiant d'appel intermédiaire associé audit identifiant d'appel principal du deuxième dispositif de communication à appeler et dédié à l'établissement de la communication initiée, ledit identifiant d'appel intermédiaire étant fonction soit de l'identifiant d'appel principal du second dispositif de communication à appeler, soit d'un service de communication associé à la communication initiée, ou bien un second message indiquant l'absence d'association entre ledit identifiant d'appel principal du deuxième dispositif de communication à appeler et un identifiant d'appel intermédiaire dédié à la communication initiée,
- en cas de réception d'un identifiant d'appel intermédiaire associé audit identifiant d'appel principal du deuxième dispositif de communication à appeler, et dédié à l'établissement, via l'identifiant d'appel intermédiaire, de la communication initiée vers ledit second dispositif de communication, déclencher un appel vers ledit identifiant d'appel intermédiaire, pour un routage de l'appel vers ledit deuxième dispositif utilisant un identifiant d'appel secondaire du dispositif de communication appelant, ledit identifiant secondaire ayant été préalablement associé en correspondance avec les informations d'identification associées au dispositif de communication appelant,
- en cas de réception d'un message indiquant l'absence d'association entre ledit identifiant d'appel principal du deuxième dispositif de communication et un identifiant d'appel intermédiaire dédié à la communication initiée, déclencher un appel vers l'identifiant d'appel principal du deuxième dispositif de communication, en utilisant l'identifiant d'appel principal du premier dispositif de communication appelant.

6. Dispositif de communication, dit premier dispositif de communication appelant (DC1), disposant d'un identifiant d'appel principal (IAP1), le premier dispositif de communication appelant comprenant un circuit de traitement (CT2) qui est agencé pour :
- envoyer, à destination d'un dispositif de gestion de communication (DGC), un premier message d'initiation d'une communication avec un second dispositif de communication à appeler disposant d'un identifiant d'appel principal, ledit premier message comprenant :
• des informations d'identification associées au premier dispositif de communication appelant préalablement enregistrées dans le dispositif de gestion de communication,
• l'identifiant d'appel principal (IAP2) du second dispositif de communication à appeler,
- recevoir, sur réponse audit premier message, en provenance du dispositif de gestion de communication, ou bien un identifiant d'appel intermédiaire associé audit identifiant d'appel principal du deuxième dispositif de communication à appeler et dédié à l'établissement de la communication initiée, ledit identifiant d'appel intermédiaire étant fonction soit de l'identifiant d'appel principal du second dispositif de communication à appeler, soit d'un service de communication associé à la communication initiée, ou bien un second message indiquant l'absence d'association entre ledit identifiant d'appel principal du deuxième dispositif de communication à appeler et un identifiant d'appel intermédiaire dédié à la communication initiée,
- en cas de réception d'un identifiant d'appel intermédiaire associé audit identifiant d'appel principal du deuxième dispositif de communication à appeler, et dédié à l'établissement, via l'identifiant d'appel intermédiaire, de la communication initiée vers ledit second dispositif de communication, déclencher un appel vers ledit identifiant d'appel intermédiaire, pour un routage de l'appel vers ledit deuxième dispositif utilisant un identifiant d'appel secondaire du dispositif de communication appelant, ledit identifiant secondaire ayant été préalablement associé en correspondance avec les informations d'identification associées au dispositif de communication appelant,
- en cas de réception d'un message indiquant l'absence d'association entre ledit identifiant d'appel principal du deuxième dispositif de communication et un identifiant d'appel intermédiaire dédié à la communication initiée, déclencher un appel vers l'identifiant d'appel principal du deuxième dispositif de communication, en utilisant l'identifiant d'appel principal du premier dispositif de communication appelant.

7. Dispositif de gestion de communication (DGC) pour l'établissement d'une communication comprenant un circuit de traitement (CT1) qui est agencé pour :
- recevoir un premier message, en provenance d'un premier dispositif de communication, ledit premier message étant un message pour initier une communication à destination d'un deuxième dispositif de communication (DC2), les premier et deuxième dispositifs de communication ayant chacun un identifiant d'appel principal, ledit premier message comprenant :
• des informations d'identification associées au premier dispositif de communication préalablement enregistrées dans le dispositif de gestion de communication,
• l'identifiant d'appel principal du deuxième dispositif de communication,
- rechercher une association entre l'identifiant d'appel principal du deuxième dispositif de communication et un identifiant (IADₙ) d'appel intermédiaire fonction soit de l'identifiant d'appel principal du deuxième dispositif de communication contenu dans le message reçu, soit d'un service de communication associé à la communication à router,
- si une association est trouvée,
• sélectionner ledit identifiant d'appel intermédiaire en tant qu'identifiant d'appel dédié à la communication à router, via ledit identifiant d'appel intermédiaire, vers ledit deuxième dispositif de communication,
• envoyer au premier dispositif de communication un message contenant l'identifiant d'appel intermédiaire associé audit identifiant d'appel principal du deuxième dispositif de communication,
• intercepter un appel du premier dispositif de communication vers l'identifiant d'appel intermédiaire, puis router ledit appel vers l'identifiant d'appel principal du deuxième dispositif de communication, en utilisant un identifiant d'appel secondaire du premier dispositif de communication, ledit identifiant secondaire ayant été préalablement associé en correspondance avec les informations d'identification associées au premier dispositif de communication,
- si aucune association n'est trouvée, envoyer au premier dispositif de communication un message indiquant l'absence d'association, pour déclencher un appel du premier dispositif de communication vers l'identifiant d'appel principal du deuxième dispositif de communication, en utilisant l'identifiant d'appel principal du premier dispositif de communication.

8. Dispositif de gestion de communication (DGC) selon la revendication 7, dans lequel ledit circuit de traitement (CT1) qui est agencé pour :
- un envoi dudit identifiant d'appel intermédiaire vers un centre de commutation en charge de router les communications destinées audit numéro d'appel intermédiaire vers ledit identifiant d'appel principal dudit deuxième dispositif ;
- sur requête dudit centre de commutation, un envoi dudit identifiant d'appel secondaire associé audit numéro d'appel intermédiaire audit centre de commutation.

9. Programme d'ordinateur comportant des instructions de code de programme pour l'exécution des étapes du procédé d'établissement d'une communication selon l'une quelconque des revendications 1 à 4, lorsque ledit programme est exécuté sur un dispositif de gestion de communication.

10. Programme d'ordinateur comportant des instructions de code de programme pour l'exécution des étapes du procédé selon la revendication 5, lorsque ledit programme est exécuté sur un dispositif de communication.

11. Support d'enregistrement lisible par un ordinateur sur lequel est enregistré un programme d'ordinateur comprenant des instructions de code de programme pour l'exécution des étapes du procédé d'établissement d'une communication selon l'une quelconque des revendications 1 à 4 lorsque ledit programme est exécuté sur un dispositif de gestion de communication.

12. Support d'enregistrement lisible par un ordinateur sur lequel est enregistré un programme d'ordinateur comprenant des instructions de code de programme pour l'exécution des étapes du procédé selon la revendication 5, lorsque ledit programme est exécuté sur un dispositif de communication.

## Patentansprüche

1. Verfahren zur Herstellung einer Verbindung, durchgeführt im Bereich einer Verbindungsverwaltungsvorrichtung (DGC), das enthält:
- einen Empfang (ST1) einer ersten Nachricht von einer ersten Verbindungsvorrichtung, wobei die erste Nachricht eine Nachricht ist, um eine für eine zweite Verbindungsvorrichtung (DC2) bestimmte Verbindung zu starten, wobei die erste und die zweite Verbindungsvorrichtung je eine Hauptanrufkennung haben, wobei die erste Nachricht enthält:
• der ersten Verbindungsvorrichtung zugeordnete Identifikationsinformationen, die vorher in der Verbindungsverwaltungsvorrichtung gespeichert wurden,
• die Hauptanrufkennung (IAP2) der zweiten Verbindungsvorrichtung,
- eine Suche (ST3) einer Zuordnung zwischen der Hauptanrufkennung der zweiten Verbindungsvorrichtung und einer Zwischenanrufkennung (IADₙ) abhängig entweder von der in der empfangenen Nachricht enthaltenen Hauptanrufkennung der zweiten Verbindungsvorrichtung, oder von einem der zu routenden Verbindung zugeordneten Verbindungsdienst,
- wenn eine Zuordnung gefunden wird,
• Auswahl (ST4a) der Zwischenanrufkennung als die der über die Zwischenanrufkennung zur zweiten Verbindungsvorrichtung zu routenden Verbindung dedizierte Anrufkennung,
• Senden (ST6a) einer Nachricht an die erste Verbindungsvorrichtung, die die der Hauptanrufkennung der zweiten Verbindungsvorrichtung zugeordnete Zwischenanrufkennung enthält,
• Abfangen (ST7a-ST9a) eines Anrufs der ersten Verbindungsvorrichtung zur Zwischenanrufkennung, dann Routen (ST10a) des Anrufs zur Hauptanrufkennung der zweiten Verbindungsvorrichtung, unter Verwendung einer Sekundäranrufkennung der ersten Verbindungsvorrichtung, wobei die Sekundärkennung vorher in Übereinstimmung mit den der ersten Verbindungsvorrichtung zugeordneten Identifikationsinformationen zugeordnet wurde,
- wenn keine Zuordnung gefunden wird, Senden (ST4b) einer die Abwesenheit einer Zuordnung anzeigenden Nachricht an die erste Verbindungsvorrichtung, um einen Anruf der ersten Verbindungsvorrichtung zur Hauptanrufkennung der zweiten Verbindungsvorrichtung auszulösen, unter Verwendung der Hauptanrufkennung der ersten Verbindungsvorrichtung.

2. Verfahren nach Anspruch 1, das enthält:
- Senden der Zwischenanrufkennung zu einer Vermittlungsstelle, die für das Routen der für die Zwischenanrufnummer bestimmten Verbindungen zur Hauptanrufkennung der zweiten Vorrichtung zuständig ist;
- auf Anforderung der Vermittlungsstelle, Senden der der Zwischenanrufnummer zugeordneten Sekundäranrufkennung an die Vermittlungsstelle.

3. Verfahren nach einem der Ansprüche 1 bis 2, wobei die Zuordnung zwischen der Hauptanrufkennung der zweiten Verbindungsvorrichtung und einer Zwischenanrufkennung (IADₙ) abhängig von der Hauptanrufkennung der zweiten Verbindungsvorrichtung anwendet:
- eine Identifikation (STC30') des Netzwerktyps, mit dem die zweite Verbindungsvorrichtung verbunden ist,
- eine Auswahl (STC31) einer Zwischenanrufkennung gemäß dem identifizierten Netzwerktyp als die der zu routenden Verbindung dedizierte Anrufkennung.

4. Verfahren nach einem der Ansprüche 1 bis 3, wobei die Zuordnung zwischen der Hauptanrufkennung der zweiten Verbindungsvorrichtung und einer unbestimmten Anrufkennung (IADₙ) abhängig von einem der herzustellenden Verbindung zugeordneten Verbindungsdienst eine Auswahl (STC31') einer Zwischenanrufkennung entsprechend einer gebührenfreien Anrufkennung als die der zu routenden Verbindung dedizierte Anrufkennung anwendet.

5. Verfahren, das in einer ersten Verbindungsvorrichtung angewendet wird, anrufende erste Verbindungsvorrichtung (DC1) genannt, die über eine Hauptanrufkennung (IAP1) verfügt, wobei das Verfahren geeignet ist, um:
- an eine Verbindungsverwaltungsvorrichtung (DGC) eine erste Einleitungsnachricht einer Verbindung mit einer anzurufenden zweiten Verbindungsvorrichtung zu senden, die über eine Hauptanrufkennung verfügt, wobei die erste Nachricht enthält:
• der anrufenden ersten Verbindungsvorrichtung zugeordnete Identifikationsinformationen, die vorher in der Verbindungsverwaltungsvorrichtung gespeichert wurden,
• die Hauptanrufkennung (IAP2) der anzurufenden zweiten Verbindungsvorrichtung,
- bei Antwort auf die erste Nachricht, von der Verbindungsverwaltungsvorrichtung kommend, entweder eine Zwischenanrufkennung, die der Hauptanrufkennung der anzurufenden zweiten Verbindungsvorrichtung zugeordnet und der Herstellung der eingeleiteten Verbindung dediziert ist, wobei die Zwischenanrufkennung entweder von der Hauptanrufkennung der anzurufenden zweiten Verbindungsvorrichtung oder einem der eingeleiteten Verbindung zugeordneten Verbindungsdienst abhängt, oder eine zweite Nachricht zu empfangen, die die Abwesenheit einer Zuordnung zwischen der Hauptanrufkennung der anzurufenden zweiten Verbindungsvorrichtung und einer der eingeleiteten Verbindung dedizierten Zwischenanrufkennung anzeigt,
- im Fall des Empfangs einer der Hauptanrufkennung der anzurufenden zweiten Verbindungsvorrichtung zugeordneten und der Herstellung der eingeleiteten Verbindung zur zweiten Verbindungsvorrichtung dedizierten Zwischenanrufkennung über die Zwischenanrufkennung, einen Anruf zur Zwischenanrufkennung für ein Routen des Anrufs zur zweiten Vorrichtung unter Verwendung einer Sekundäranrufkennung der anrufenden Verbindungsvorrichtung auszulösen, wobei die Sekundärkennung vorher in Übereinstimmung mit den der anrufenden Verbindungsvorrichtung zugeordneten Identifikationsinformationen zugeordnet wurde,
- im Fall des Empfangs einer Nachricht, die die Abwesenheit einer Zuordnung zwischen der Hauptanrufkennung der zweiten Verbindungsvorrichtung und einer der eingeleiteten Verbindung dedizierten Zwischenanrufkennung anzeigt, einen Anruf zur Hauptanrufkennung der zweiten Verbindungsvorrichtung auszulösen, unter Verwendung der Hauptanrufkennung der anrufenden ersten Verbindungsvorrichtung.

6. Verbindungsvorrichtung, anrufende erste Verbindungsvorrichtung (DC1) genannt, die über eine Hauptanrufkennung (IAP1) verfügt, wobei die anrufende erste Verbindungsvorrichtung einen Verarbeitungsschaltkreis (CT2) enthält, der eingerichtet ist, um:
- an eine Verbindungsverwaltungsvorrichtung (DGC) eine erste Einleitungsnachricht einer Verbindung mit einer anzurufenden zweiten Verbindungsvorrichtung zu senden, die über eine Hauptanrufkennung verfügt, wobei die erste Nachricht enthält:
• der ersten anrufenden Verbindungsvorrichtung zugeordnete Identifikationsinformationen, die vorher in der Verbindungsverwaltungsvorrichtung gespeichert wurden,
• die Hauptanrufkennung (IAP2) der zweiten anzurufenden Verbindungsvorrichtung,
- bei Antwort auf die erste Nachricht, von der Verbindungsverwaltungsvorrichtung kommend, entweder eine der Hauptanrufkennung der anzurufenden zweiten Verbindungsvorrichtung zugeordnete und der Herstellung der eingeleiteten Verbindung dedizierte Zwischenanrufkennung, wobei die Zwischenanrufkennung entweder von der Hauptanrufkennung der anzurufenden zweiten Verbindungsvorrichtung oder von einem der eingeleiteten Verbindung zugeordneten Verbindungsdienst abhängt, oder eine zweite Nachricht zu empfangen, die die Abwesenheit einer Zuordnung zwischen der Hauptanrufkennung der anzurufenden zweiten Verbindungsvorrichtung und einer der eingeleiteten Verbindung dedizierte Zwischenanrufkennung anzeigt,
- im Fall des Empfangs einer der Hauptanrufkennung der anzurufenden zweiten Verbindungsvorrichtung zugeordneten und der Herstellung über die Zwischenanrufkennung der eingeleiteten Verbindung zur zweiten Verbindungsvorrichtung dedizierten Zwischenanrufkennung, einen Anruf zur Zwischenanrufkennung für ein Routen des Anrufs zur zweiten Vorrichtung unter Verwendung einer Sekundäranrufkennung der anrufenden Verbindungsvorrichtung auszulösen, wobei die Sekundärkennung vorher in Übereinstimmung mit den der anrufenden Verbindungsvorrichtung zugeordneten Identifikationsinformationen zugeordnet wurde,
- im Fall des Empfangs einer Nachricht, die die Abwesenheit einer Zuordnung zwischen der Hauptanrufkennung der zweiten Verbindungsvorrichtung und einer der eingeleiteten Verbindung dedizierten Zwischenanrufkennung anzeigt, einen Anruf zur Hauptanrufkennung der zweiten Verbindungsvorrichtung auszulösen, unter Verwendung der Hauptanrufkennung der anrufenden ersten Verbindungsvorrichtung.

7. Verbindungsverwaltungsvorrichtung (DGC) zur Herstellung einer Verbindung, die einen Verarbeitungsschaltkreis (CT1) enthält, der eingerichtet ist, um:
- eine erste Nachricht von einer ersten Verbindungsvorrichtung zu empfangen, wobei die erste Nachricht eine Nachricht ist, um eine für eine zweite Verbindungsvorrichtung (DC2) bestimmte Verbindung einzuleiten, wobei die ersten und zweiten Verbindungsvorrichtungen je eine Hauptanrufkennung haben, wobei die erste Nachricht enthält:
• vorher in der Verbindungsverwaltungsvorrichtung gespeicherte Identifikationsinformationen, die der ersten Verbindungsvorrichtung zugeordnet sind,
• die Hauptanrufkennung der zweiten Verbindungsvorrichtung,
- eine Zuordnung zwischen der Hauptanrufkennung der zweiten Verbindungsvorrichtung und einer Zwischenanrufkennung (IADₙ) zu suchen, abhängig entweder von der in der empfangenen Nachricht enthaltenen Hauptanrufkennung der zweiten Verbindungsvorrichtung oder von einem der zu routenden Verbindung zugeordneten Verbindungsdienst,
- wenn eine Zuordnung gefunden wird,
• die Zwischenanrufkennung als die der über die Zwischenanrufkennung zur zweiten Verbindungsvorrichtung zu routenden Verbindung dedizierte Anrufkennung auszuwählen,
• an die erste Verbindungsvorrichtung eine Nachricht zu senden, die die der Hauptanrufkennung der zweiten Verbindungsvorrichtung zugeordnete Zwischenanrufkennung enthält,
• einen Anruf der ersten Verbindungsvorrichtung an die Zwischenanrufkennung abzufangen, dann den Anruf zur Hauptanrufkennung der zweiten Verbindungsvorrichtung unter Verwendung einer Sekundäranrufkennung der ersten Verbindungsvorrichtung zu routen, wobei die Sekundärkennung vorher in Übereinstimmung mit den der ersten Verbindungsvorrichtung zugeordneten Identifikationsinformationen zugeordnet wurde,
- wenn keine Zuordnung gefunden wird, an die erste Verbindungsvorrichtung eine die Abwesenheit einer Zuordnung anzeigende Nachricht zu senden, um einen Anruf der ersten Verbindungsvorrichtung zur Hauptanrufkennung der zweiten Verbindungsvorrichtung auszulösen, unter Verwendung der Hauptanrufkennung der ersten Verbindungsvorrichtung.

8. Verbindungsverwaltungsvorrichtung (DGC) nach Anspruch 7, wobei der Verarbeitungsschaltkreis (CT1) eingerichtet ist für:
- ein Senden der Zwischenanrufkennung an eine Vermittlungsstelle, die für das Routen der für die Zwischenanrufnummer bestimmten Verbindungen zur Hauptanrufkennung der zweiten Vorrichtung zuständig ist;
- auf Anforderung der Vermittlungsstelle, ein Senden der der Zwischenanrufnummer zugeordneten Sekundäranrufkennung an die Vermittlungsstelle.

9. Computerprogramm, das Programmcodeanweisungen für die Ausführung der Schritte des Verfahrens zur Herstellung einer Verbindung nach einem der Ansprüche 1 bis 4 aufweist, wenn das Programm auf einer Verbindungsverwaltungsvorrichtung ausgeführt wird.

10. Computerprogramm, das Programmcodeanweisungen für die Ausführung der Schritte des Verfahrens nach Anspruch 5 aufweist, wenn das Programm auf einer Verbindungsvorrichtung ausgeführt wird.

11. Computerlesbarer Speicherträger, auf dem ein Computerprogramm gespeichert ist, das Programmcodeanweisungen für die Ausführung der Schritte des Verfahrens zur Herstellung einer Verbindung nach einem der Ansprüche 1 bis 4 enthält, wenn das Programm auf einer Verbindungsverwaltungsvorrichtung ausgeführte wird.

12. Computerlesbarer Speicherträger, auf dem ein Computerprogramm gespeichert ist, das Programmcodeanweisungen für die Ausführung der Schritte des Verfahrens nach Anspruch 5 enthält, wenn das Programm auf einer Verbindungsverwaltungsvorrichtung ausgeführt wird.

## Claims

1. Method for setting up a communication, implemented on a communication management device (DGC), comprising:
- reception (ST1) of a first message from a first communication device, said first message being a message to initiate a communication to a second communication device (DC2), the first and second communication devices each having a main call identifier, said first message comprising:
• identification information associated with the first communication device previously stored in the communication management device,
• the main call identifier (IAP2) of the second communication device,
- a search (ST3) for an association between the main call identifier of the second communication device and an intermediate call identifier (IADn) that is a function either of the main call identifier of the second communication device contained in the message received, or of a communication service associated with the communication to be routed,
- if an association is found,
• selection (ST4a) of said intermediate call identifier as call identifier dedicated to the communication to be routed, via said intermediate call identifier, to said second communication device,
• sending (ST6a) to the first communication device of a message containing said intermediate call identifier associated with said main call identifier of the second communication device,
• interception (ST7a-ST9a) of a call from the first communication device to the intermediate call identifier, then routing (ST10a) of the call to the main call identifier of the second communication device, by using a secondary call identifier of the first communication device, the secondary identifier having previously been correlated with the identification information associated with the first communication device,
- if no association is found, sending (ST4b) to the first communication device of a message indicating the absence of association, to trigger a call from the first communication device to the main call identifier of the second communication device, by using the main call identifier of the first communication device.

2. Method according to Claim 1, comprising:
- sending of said intermediate call identifier to a switching centre responsible for routing the communications intended for said intermediate call number to said main call identifier of said second device;
on request from said switching centre, sending of said secondary call identifier associated with said intermediate call number to said switching centre.

3. Method according to one of Claims 1 and 2, wherein said association between the main call identifier of the second communication device and an intermediate call identifier (IADn) that is a function of the main call identifier of the second communication device implements:
- an identification (STC30') of the network type to which the second communication device is connected,
- a selection (STC31') of an intermediate call identifier conforming to the identified network type, as call identifier dedicated to the communication to be routed.

4. Method according to one of Claims 1 to 3, wherein said association between the main call identifier of the second communication device and an indeterminate call identifier (IADn) that is a function of a communication service associated with the communication to be setup implements a selection (STC31') of an intermediate call identifier corresponding to a free call identifier, as call identifier dedicated to the communication to be routed.

5. Method implemented in a first communication device, called first calling communication device (DC1), having a main call identifier (IAP1), the method being adapted to:
- send, to a communication management device (DGC), a first message to initiate a communication with a second communication device to be called having a main call identifier, said first message comprising:
• identification information associated with the first calling communication device previously stored in the communication management device,
• the main call identifier (IAP2) of the second communication device to be called,
- receive, on response to said first message, from the communication management device, either an intermediate call identifier associated with said main call identifier of the second communication device to be called and dedicated to the setting up of the initiated communication, said intermediate call identifier being a function either of the main call identifier of the second communication device to be called, or of a communication service associated with the initiated communication, or else a second message indicating the absence of association between said main call identifier of the second communication device to be called and an intermediate call identifier dedicated to the initiated communication,
- in case of reception of an intermediate call identifier associated with said main call identifier of the second communication device to be called, and dedicated to the setting up, via the intermediate call identifier, of the communication initiated to said second communication device, trigger a call to said intermediate call identifier, for a routing of the call to said second device using a secondary call identifier of the calling communication device, said secondary identifier having previously been correlated with the identification information associated with the calling communication device,
- in case of reception of a message indicating the absence of association between said main call identifier of the second communication device and an intermediate call identifier dedicated to the initiated communication, trigger a call to the main call identifier of the second communication device, by using the main call identifier of the first calling communication device.

6. Communication device, called first calling communication device (DC1), having a main call identifier (IAP1), the first calling communication device comprising a processing circuit (CT2) which is arranged to:
- send, to a communication management device (DGC), a first message initiating a communication with a second communication device to be called having a main call identifier, said first message comprising:
• identification information associated with the first calling communication device previously stored in the communication management device,
• the main call identifier (IAP2) of the second communication device to be called,
- receive, on response to said first message, from the communication management device, either an intermediate call identifier associated with said main call identifier of the second communication device to be called and dedicated to the setting up of the initiated communication, said intermediate call identifier being a function either of the main call identifier of the second communication device to be called, or of a communication service associated with the initiated communication, or else a second message indicating the absence of association between said main call identifier of the second communication device to be called and an intermediate call identifier dedicated to the initiated communication,
- in case of reception of an intermediate call identifier associated with said main call identifier of the second communication device to be called, and dedicated to the setting up, via the intermediate call identifier of the communication initiated to said second communication device, trigger a call to said intermediate call identifier, for a routing of the call to said second device using a secondary call identifier of the calling communication device, said secondary identifier having been previously correlated with the identification information associated with the calling communication device,
- in case of reception of a message indicating the absence of association between said main call identifier of the second communication device and an intermediate call identifier dedicated to the initiated communication, trigger a call to the main call identifier of the second communication device, by using the main call identifier of the first calling communication device.

7. Communication management device (DGC) for the setting up of a communication comprising a processing circuit (CT1) which is arranged to:
- receive a first message, from a first communication device, said first message being a message to initiate a communication to a second communication device (DC2), the first and second communication devices each having a main call identifier, said first message comprising:
• identification information associated with the first communication device previously stored in the communication management device,
• the main call identifier of the second communication device,
- search for an association between the main call identifier of the second communication device and an intermediate call identifier (IADn) that is a function either of the main call identifier of the second communication device contained in the message received, or of a communication service associated with the communication to be routed,
- if an association is found,
• select said intermediate call identifier as call identifier dedicated to the communication to be routed, via said intermediate call identifier, to said second communication device,
• send to the first communication device a message containing the intermediate call identifier associated with said main call identifier of the second communication device,
• intercept a call from the first communication device to the intermediate call identifier, then route said call to the main call identifier of the second communication device, by using a secondary call identifier of the first communication device, said secondary identifier having been previously correlated with the identification information associated with the first communication device,
- if no association is found, send to the first communication device a message indicating the absence of association, to trigger a call from the first communication device to the main call identifier of the second communication device, by using the main call identifier of the first communication device.

8. Communication management device (DGC) according to Claim 7, wherein said processing circuit (CT1) is arranged to:
- send said intermediate call identifier to a switching centre responsible for routing the communications intended for said intermediate call number to said main call identifier of said second device;
- on request from said switching centre, send said secondary call identifier associated with said intermediate call number to said switching centre.

9. Computer program comprising program code instructions for the execution of the steps of the method for setting up a communication according to any one of Claims 1 to 4, when said program is run on a communication management device.

10. Computer program comprising program code instructions for the execution of the steps of the method according to Claim 5, when said program is run on a communication device.

11. Computer-readable storage medium on which is stored a computer program comprising program code instructions for the execution of the steps of the method for setting up a communication according to any one of Claims 1 to 4 when said program is run on a communication management device.

12. Computer-readable storage medium on which is stored a computer program comprising program code instructions for the execution of the steps of the method according to Claim 5, when said program is run on a communication device.
